(19) Europäisches Patentamt
European Patent Office
Office européen des brevets

(11) **EP 2 051 241 B1**

(12) **EUROPEAN PATENT SPECIFICATION**

(45) Date of publication and mention
of the grant of the patent:
**08.12.2010 Bulletin 2010/49**

(51) Int Cl.:
**G10L 13/02** *(2006.01)*     **G10L 15/22** *(2006.01)*
**B60R 16/037** *(2006.01)*

(21) Application number: **07020295.7**

(22) Date of filing: **17.10.2007**

(54) **Speech dialog system with play back of speech output adapted to the user**

Sprachdialogsystem mit an den Benutzer angepasster Sprachausgabe

Système de dialogue vocal avec rendu du signal de parole adapté à l'utilisateur

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**22.04.2009 Bulletin 2009/17**

(73) Proprietor: **Harman Becker Automotive Systems GmbH
76307 Karlsbad (DE)**

(72) Inventors:
• **Buck, Markus
88400 Biberach (DE)**
• **Schmidt, Gerhard**
89081 Ulm (DE)
• **Haulick, Tim**
89143 Blaubeuren (DE)

(74) Representative: **Bertsch, Florian Oliver et al
Kraus & Weisert
Patent- und Rechtsanwälte
Thomas-Wimmer-Ring 15
80539 München (DE)**

(56) References cited:
**US-A1- 2002 065 651     US-A1- 2005 256 716
US-A1- 2006 129 403     US-A1- 2006 229 873
US-A1- 2007 073 543     US-B1- 6 839 670**

## Description

This invention relates to a speech dialog system and to a method for adapting the speech output of the speech dialog system. The application relates especially, but not exclusively, to vehicle-based speech dialog systems in which the play back mode of the speech output is adapted to the current situations.

Background of the invention

Speech dialog systems are frequently used in nowadays vehicles in order to control the different electronic components of a vehicle. By way of example, a speech dialog system is used in connection with a navigation system, the driver uttering a voice command indicating the destination location for which the navigation unit should calculate a route. Another application of speech dialog systems is its use in connection with a vehicle communication system, the user uttering a telephone number to be dialled etc. In known speech dialog systems, a speech recognition unit recognizes the user's speech input and normally, the recognized speech input is again output to the user so that the user can confirm that the speech recognition unit has correctly recognized the speech input. In speech dialog systems of the prior art, the speech output are played back in a fixed manner regardless of the current situation and circumstances. The speech output is always the same independent of the fact whether the user spoke slowly or very fast, very loudly or at a low voice. Especially, well-experienced users also find it complicated when the speech dialog system outputs speech output in a relatively low output velocity. Furthermore, the receptivity of the user may strongly depend on the driving situation in which the vehicle is actually moving. When the user is driving on a road with very little traffic and very little crossways, the driver can concentrate on the speech output of the speech dialog system more easily than in situations where the driver is driving downtown with lots of traffic and lots of traffic signs.

US 2006/0229873 discloses an apparatus for adapting output speech in accordance with the context of a communication, a context detector modifying an outgoing message in accordance with the detected context.

Summary

Accordingly, a need exists to provide a speech dialog system in which the playback mode of the speech output is adapted to the user and in such a way that the present receptivity of the user is considered and that the comfort for the user is further increased.

This need is met by the features of the independent claims. In the dependent claims preferred embodiments of the invention are described.

According to a first aspect of the invention, a speech dialog system is provided comprising a speech recognition unit recognizing a user's speech input. Furthermore, a speech output unit is provided outputting speech to the user in response to the user's speech input. Additionally, the system comprises a speech output control unit, controlling a play back mode of the speech output of the user. In order to adapt the play back mode of the speech output, a detector detects information from the speech unit and/or a sensor detecting information about the surrounding of the speech dialog system. This information is then used to adapt the play back mode of the speech output unit, meaning that the play back mode is adapted depending on the content of the information received from the detector. The invention allows a variation of the play back mode, the variation helping to increase the user comfort, the enhancement of intelligibility, the manipulation of the user's behaviour and for minimizing the distraction of the driver in difficult traffic situations.

According to the first embodiment of the invention, the detector detects the speech input from the user and analyzes the speech input. The speech output control unit can then adapt the play back mode in accordance with the analyzed speech input. When the speech output is adapted to the speech input an adequate speech output called "prompt" can be generated which fits to the characteristics of the user's utterance. When the speech input of the user is fast, the speech output of the system can also be accelerated, when the user speech input is very slow, the output can also be slowed down. When the user speaks with a very loud voice, the system can respond also with a loud speech output or when the user's utterance is made at low voice, the output could be adapted accordingly by lowering the signal level of the speech output. It is possible to change the output velocity, the sound level, the pitch, the cadence or the stress of the speech output in order to adapt it to the speech input of the user. However, it is also possible to change some of these parameters together.

In one embodiment of the invention, the most important parameters of the speech input can be adjusted in order to increase the user comfort. If the speech output properties like velocity, sound level, stress and pitch or cadence should be adapted, it is preferable that the detector also detects at least some of these parameters.

According to the invention, the speech velocity of the speech input of the user is detected by determining the time period of the different words in the speech input meaning the time needed to utter each word. During the recognition step, the speech recognition unit recognizes the user's speech input and therefore separates the different words contained in the speech input. The detector can then detect the time interval needed to utter each word. Additionally, the detector can determine the time interval between consecutive words. These time values, i.e. at time period of each word and the interval between different words can then be compared to predetermined reference values which may have been determined in advance and stored in the system. If a significant difference in speed of the user's speech input is detected, be it a much slower or a much faster speech input, the speech output of the speech dialog system can be adapted accordingly.

The adaptation of the speech output can be obtained by adapting a standard speech output, e.g. by changing the play back velocity, by changing the frequency characteristics etc. For this embodiment one pre-stored acoustical representation of each word to be output by the speech dialog system exists, the different words being assembled to a speech output as known in prior art text to speech (TTS) systems. In another embodiment of the invention, it is possible to provide several pre-stored acoustical representation for each word in different velocities, or each word being differently stressed. The complete speech output is then assembled by selecting the word with the needed velocity. By way of example, when the detector detects that the user's speech input velocity is slower than a predetermined threshold velocity, the speech output controller can lower the output velocity by adapting the complete assembled speech output. As an alternative, pre-stored utterances with a lower speech velocity can be used and selected for the speech output. In the other case, the speech output controller can increase the output velocity when the detector detects that the speech input velocity is higher than a predetermined threshold velocity.

When the speech dialog system is used in connection with a communication system, the user can, via voice, select a telephone number to be dialled by the communication system. In such a situation, a user often utters the different figures of the telephone number in groups meaning that the time interval between two consecutive figures of one group is slower than the time interval between two consecutive figures of two different groups. When the user has finished the input of the sequence of figures, the speech dialog system normally repeats the recognized figures so that the user can verify whether the system has correctly identified the uttered figures. When the speech dialog system repeats the recognized figures one after the other with the same time interval between the different figures, the user may have difficulties to recognize the repeated telephone number as most of the users recognize or keep in mind a larger set of figures by segmenting the figures into groups. According to one embodiment of the invention, the detector can detect the segmentation of the figures of the speech input into groups and then the speech output control unit can control the speech output in such a way that the segmentation is kept when the recognized figures are repeated to the user.

Another possibility to increase the comfort for the user is the following: often, a speech dialog system is, as mentioned above, used in connection with a mobile communication unit or a navigation system in which the user can, by a speech input, enter the destination location the user wants to reach. In both cases, when the speech dialog system is used with a navigation system or a communication system, a data base is provided containing a plurality of data sets such as a name with the corresponding address and telephone number etc. The data base could also contain a personal address list, a personal telephone book or a list of previously dialled telephone numbers. When the user utters a speech input corresponding to a telephone number or corresponding to an address, the detector can compare the recognized user's speech input to a data base containing the plurality of data sets. If a data set contains the recognized speech input, the speech output control unit can be configured in such a way that the speech output which would normally repeat the recognized speech input is omitted, as the speech dialog system recognizes that it has correctly identified the speech input. The speech dialog system which can be a module of the communication system or the navigation system can then directly dial the recognized number or carry out a route calculation to the uttered destination location. If this embodiment is used in connection with figures for telephone numbers, the cancellation of repeating speech output can, in one embodiment, only be activated when the input figures contain a certain number of figures such as more than five or more than six figures in total. In conclusion, the comparison of the speech input to the data base containing the different data sets increases the comfort for the user and accelerates the handling of the system as the speech output repeating the recognized speech input can be omitted when a data set containing the recognized speech input is found in the database.

Another aspect of the described invention can be seen in the fact that the intelligibility for the user can be increased. By way of example, it is possible that the detector detects the background noise of the speech input, the speech output control unit adapting the speech output in accordance to the detected background noise. When it is detected that the speech input was uttered in a noisy environment, the speech output control unit may increase the sound level of the speech output so that the user can more easily understand the speech output.

The detector can furthermore detect the pitch characteristics of the speech input, the pitch being the property of the sound signal measured by its perceived frequency. The speech output control unit can then adapt the pitch characteristics of the speech output in agreement to the pitch characteristics of the speech input. In this embodiment it is possible to completely adapt the pitch characteristics of the speech input to the output or to only partly adapt the pitch characteristics of the speech output to the input.

In another embodiment of the invention, it is possible to manipulate the user's behaviour. By way of example, when the detector detects that the signal level of the speech input is lower than a predetermined threshold level, the speech output control unit can increase a Lombard effect of the speech output. The Lombard effect describes the tendency to increase vocal intensity even to the extend of forcing the voice in response to background noise. When the user speaks with such a low voice that the speech dialog system has problems to correctly recognize the speech input, the Lombard level of the speech output can be increased. The speech output becomes more concise and the user should be incited, even unconsciously, to adapt his or her speech characteristic to the speech characteristics of the speech output of the speech dialog system. In the other case, when the detector detects that the signal level of the speech output is too high deteriorating the detected speech signal due to clipping, it is possible that the Lombard level of the speech output is lowered with the intention that the user also lowers the voice. Additionally, it is possible to incite the user to speak more quickly too when the user speaksl slowly by increasing the speech output velocity, or it is possible to slow down the user by lowering the speech output velocity when the user speaks too fast.

In many applications, the speech dialog system is incorporated into a vehicle where it is part of a speech-driven multimedia system. In a vehicle speech-driven components are becoming more and more common as they should help the driver to be able to concentrate on the traffic. In this embodiment, the speech dialog system can be adapted in such a way that the distraction in difficult traffic situations is minimized. To this end, the detector can detect information of the vehicle surrounding and the speech output control unit can adapt the play back mode of the speech output in accordance to the information of the vehicle surrounding. By way of example, the detector may comprise an image sensor detecting the traffic situation around the vehicle or distance sensors detecting the distance to the other vehicles. Based on the information from the image sensor or the distance sensor, it is possible to get an overview over the traffic situation. In case of heavy traffic, the driver should concentrate on the traffic. In such a situation, it might be advisable to lower the output velocity of the speech output or to adapt the speech output in any other way so that the driver can more easily understand the speech output. The distance sensors can furthermore determine in connection with the speedometer signal whether the driver is driving very close to another vehicle at high speed, a situation in which the driver should also concentrate on the traffic. When it is detected that the vehicle is driving too closed to the vehicle driving in front, the speech output velocity may also be lowered.

When the speech dialog system is used in connection with a navigation system, a position detecting unit is provided detecting the vehicle position and determining the position of the vehicle on a map. This information can then be used to adapt the speech output in accordance to the detected position on the map. By way of example, when it is detected that the vehicle is approaching a large crossway or that the vehicle is travelling downtown in an urban area, it may be advantageous to slow down the velocity of the speech output as the user has to concentrate on driving. Furthermore, it is possible to detect an activation of a direction indicator in the vehicle. This activation can also be used to lower the output velocity of the speech output. Additionally, it is possible that the navigation system has an automatic detection of traffic signs. The adaptation of the output velocity can be carried out in dependence on the recognized traffic sign. In another embodiment, the meaning of the traffic sign itself does not need to be recognized, it is also possible to use the number of traffic signs next to the road as a basis for the determination of the velocity of the speech output.

In the different embodiments described above, a large variety of ways of adapting the play back mode of the speech output is described. In this situation it may happen that the information from one detector would result in an increase of the speech output velocity whereas the information from another detector would result in the decrease of the output velocity. The speech dialog system now, according to one embodiment of the invention, has to prioritise the different kinds of information. This means that one information which would result in the adaptation of the speech output in one way prevails over another information that would result in the adaptation of the speech output in another way. According to one embodiment of the invention, the highest priority can be assigned to the possible receptivity of the user meaning that the distraction in difficult traffic situations should be minimized. The second priority can be assigned to the manipulation of the user's behaviour in order to increase the signal quality for the speech dialog system in order to ensure that the speech dialog system is capable of correctly identifying the user's speech input. If the user's speech input level is too low, the system can encourage the user to speak up by outputting the speech output at a higher signal level as described above. The third priority can be assigned to an enhancement of the intelligibility for the user. If it is detected that the background noise is very high, the sound level of the speech output may be increased enabling the user to correctly understand the output speech. Last but not least, the lowest priority can be assigned to the increase of the user comfort by adapting the speech dialog system to the user's habits. It should be understood that it is possible to prioritise the four aspects mentioned above in a different way and to change the importance of the different aspects.

According to another embodiment of the invention, it is possible to use an expert operating mode of the speech dialog system. This expert operating mode can be detected by the detector when it is detected that the user is an experienced user. When it is detected that the user is an experienced user, the speech output control unit can switch to an expert operating mode in which at least some of the speech output to the user, which would be output to the user in an non-expert operating mode, is disabled. For an experienced user, it may be annoying to go through the whole dialog of the speech dialog system, e.g. for inputting an address. In this embodiment, the speech output of the speech dialog system may either be at least partly disabled by replacing some of the speech output by a simple beep tone or by any other sound. In another embodiment, it is possible to shorten the speech output. By way of example, when the user wants the speech dialog system to enter a telephone number, he or she may utter "Select telephone number". The speech dialog system may then in the normal operating mode answer "Please input the number" followed by a beep tone. When the system notices that the user is an experienced user, the speech output of the speech output unit may be disabled so that only a beep is output indicating to the user that he or she can now input the number. In another embodiment, is also possible that in the expert mode, the speech output is shortened by simply outputting a number or any other short speech output. The detector may detect that the user is an experienced user when the speech input of the user is input in an efficient or in an uninterrupted way. Furthermore, it is possible when the user interrupts the speech output of the system, called "barge in" then the detector may notice that it is an experienced user so that the speech output control unit will enable the expert operating mode.

The invention further relates to a method for adapting the speech output of a speech dialog system comprising the steps of claim 20. The method may comprise the different steps described above. The invention furthermore relates to a computer program product which when run on a computer carries out the above-described method. Furthermore, the invention relates to a computer readable medium having computer readable instructions on it to cause a computer to perform the above-described method.

The invention will be described in more detail with reference to the accompanying drawings, in which

Fig. 1 shows a schematical view of a speech dialog system of the invention,

Fig. 2 shows a flowchart comprising the steps for adapting the play back mode of a speech output,

Fig. 3 shows a flowchart showing the main steps of another embodiment for adapting the play back mode of a speech output, and

Fig. 4 shows a flowchart for another possibility of adapting the play back mode of a speech dialog system.

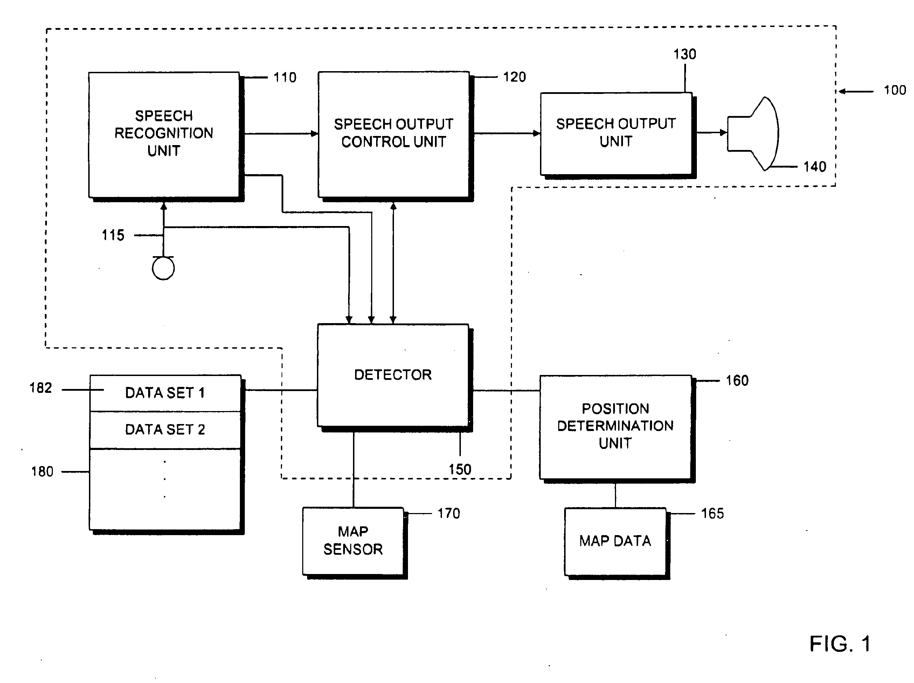

In Fig. 1 a speech dialog system 100 is shown with which the output operating mode of the speech dialog system is adapted either to the user's speech input and/or to the information received from the surrounding of the speech dialog system. The system as schematically shown in Fig. 1 comprises a speech recognition unit 110 which is able to recognize a user's speech input, the input being detected by a microphone 115 of the speech dialog system. In the embodiment shown, one microphone is used to pick up the user's voice. However, it is possible that several microphones are provided in order to correctly pick up the user's voice. Especially, in a vehicle environment, the use of a microphone array may be advantageous, the array allowing a better signal detection in a noisy environment. The speech recognition unit can be a speech recognition unit as known in the art which converts a speech signal to a sequence of words. The speech recognition unit recognizes a phoneme string and compares it to a predetermined set of phoneme strings and determines the most probable speech input based on statistical models, e.g. on the basis of hidden Markov models. The system shown in Fig. 1 further comprises a speech output control unit 120 controlling the content and the way a speech output unit 130 outputs speech to the user over a loudspeaker 140. The speech output 130 unit of a speech dialog system often repeats the input speech command as recognized by the speech recognition unit so that the user can verify whether the speech recognition unit has correctly identified the speech input. The speech dialog system further comprises a detector 150, the detector detecting and processing information received from the input speech command itself or received from other detectors disclosed in detail further below. By way of example, the detected speech signal is fed from the microphone to the detector where it is analyzed in view of speech velocity, background noise, pitch characteristics, sound level etc. After processing the detected speech signal, the detector 150 transmits the processed information to the speech output control unit which then controls the speech output unit in such a way that the speech output, especially its play back mode, is adapted to the speech input.

One possibility to adapt the play back mode of the speech output unit was described above by adapting it to the speech input. Furthermore, it is possible to adapt the play back mode of the output depending on information received from outside the speech dialog system. To this end, the detector may receive information from a position determination unit 160, e.g. when the system shown in Fig. 1 is incorporated into a vehicle. The position determination unit allows the determination of the exact vehicle position using satellite based signals alone or in connection with other signals such as velocity, curvature radius of the vehicle itself etc. By way of example, the position determination unit may be part of a navigation system installed in the vehicle. In a vehicle environment, it might be necessary to adapt the speech output play back mode in accordance to the information from the position determination unit as will be described in detail further below. The position determination unit accesses map data 165 for determining the position of the vehicle on a road network.

Furthermore, an image sensor 170 may be provided in the vehicle, the image sensor imaging the surrounding of the vehicle. By way of example, the image sensor can be part of a driver assist system, the image sensor allowing to determine the distance to the vehicle driving in front etc. When the speech dialog system shown in Fig. 1 is used in connection with a communication system, additionally, a database 180 may be provided, the database containing different data sets 182. Each data set may be an entry of an address book containing telephone numbers, addresses etc. The database 180 can be used in the following way. When the user of the speech dialog system utters a voice command for dialling a telephone number, the user utters the different figures of the telephone number into the system. The speech recognition unit can then recognize the different figures and transmit the recognized figures to the detector. The detector then accesses the database 180 in order to verify whether the input sequence of figures is contained in one of the data sets. If the input telephone number as a whole is contained in one of the data sets, the detector 150 can confirm that the recognized speech input was correctly recognized at a high probability. This information can then be transmitted to the speech output control unit 120. In a normal operating mode, the speech output unit would repeat the input figures for the user to be able to verify the correct recognition by the speech recognition unit 110. If the recognized number was found in the data set 180, the speech output control unit 120 can control the speech output unit 130 in such a way that the repetition of the recognized figures is not output to the user. A similar approach is possible when the user inputs an address using a voice command. In this example, the detector can also access the database 180 in order to verify whether the recognized address data are contained in one of the data sets. If this is the case, the speech output control unit 120 can control the speech output unit 130 in such a way that the repetition of the recognized address is disabled and therefore not output to the user so that the system can continue with the next speech input step by the user or speech output step of the speech output unit.

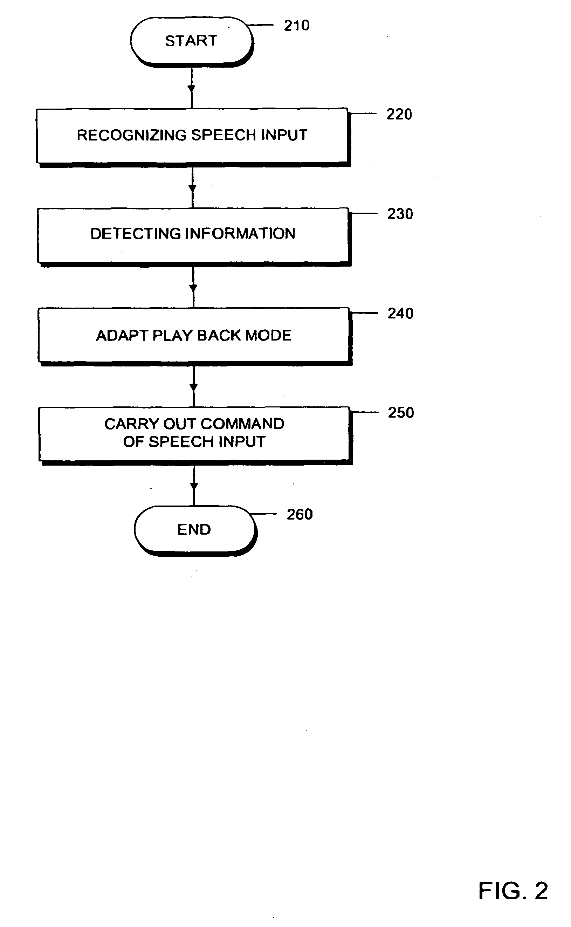

In Fig. 2, the main steps of the method for adapting the play back mode of a speech output are shown. After the start of the method in step 210, the speech input from the user is recognized by the speech recognition unit 110 in step 220. In another step 230, an information is detected on the basis of which the speech output to the user will be controlled (step 230). As discussed in connection with Fig. 1, the information is detected by the detector 150. The detected information can originate from many different sensors, be it the microphone 115 with the picked up speech signal, the position determination unit 160, the image sensor 170 or the data base 180 or any other information detecting unit. The detector processes the received information in a processing module (not shown in Fig. 1). The processed information is then used to adapt the play back mode in step 240 of Fig. 2. In step 250, the speech dialog system then carries out the command of the speech input. When the speech dialog system is connected to a communication system not shown in Fig. 1, step 250 contains the calling of a telephone number or when the speech dialog system is used in connection with a vehicle navigation unit, the navigation unit determines a route to the destination location uttered by the user. The method ends in step 260.

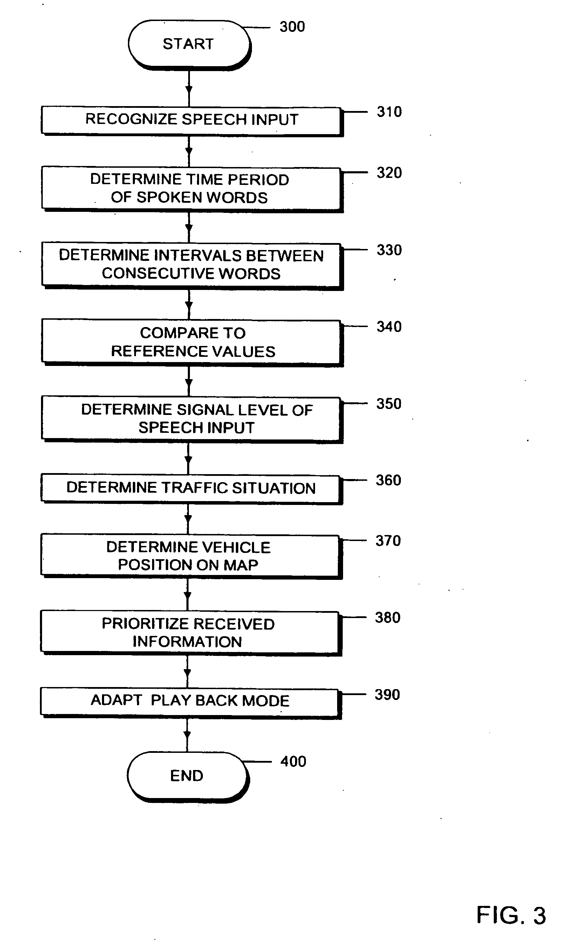

In Fig. 3, a more detailed embodiment for adapting the play back mode is shown. After the start of the method in step 300, the speech input is recognized in step 310 as was already discussed in connection with Fig. 2. According to one embodiment of the invention, the speech dialog system can be used to increase the user comfort. To this end, it is possible to adapt the play back mode of the speech output to the way the speech is input into the system. The speech recognition unit has, in the recognition step, recognized the different words contained in the speech input. This information can now be used for determining the speech input velocity. One aspect of the speech input velocity is the time the user needed to utter each word so that this time period is determined in step 320. The time period for each word can be determined by determining the starting time for each word and the stop time for each word. When the starting and the stop time for each word is known, it is easy to calculate the time period the user needed to utter each word. Additionally, it is possible, when the different words are detected, to detect the time intervals between consecutive words in step 330. It is not necessary to determine the time period of step 320 and the intervals of step 330, it is also possible to determine only one of the two values for calculating the speech velocity of the speech input. When the intervals and the time periods for the speech input have been determined (e.g. by the detector 150), the calculated values can be compared to reference values stored within the system (step 340). When it is then detected that the speech velocity of the speech input is much higher than a normal speech input as represented by the reference values, it may be advisable to speed up the speech output. This information can be transmitted to the speech output control unit which then adapts the speech output of the speech output unit 130 accordingly. In contrast thereto, when it is detected that the user's speech input was much slower than a normal speech input, the speech output velocity can be lowered accordingly.

In one embodiment of the invention, the detector detects when a number of figures is input into the system. When a user utters a telephone number, the sequence of figures is often uttered in groups. The detector may then detect the separation of the uttered figures in groups and may inform the speech output control unit accordingly. The speech output control unit can then control the speech output unit in such a way that when the recognized figures are output to the user, the separation into groups may be maintained in the speech output. This example of adapting the play back mode is shown in the following example:

    User: "Dial number"
    Speech dialog system: "The number please"
    User: "0179 ... 6789 ... 3184"

The detector can now detect this grouping of the figures and can consider this information when the information is repeated to the user.

> System: "0179 ... 6789 3184"
> User: "Dial!"
> System: "The number is dialled".

The above-described steps of adapting the play back velocity or of grouping the figures in the speech output helps to increase the user comfort during use. The handling of the speech dialog system becomes easier and more comfortable for the user.

In another embodiment, it is possible in step 350 to detect the signal level of the speech input. This is possible by determining an averaged signal power of the speech input. To this end, the amplification which is used for outputting the speech output has to be determined. The amplification factor V for an input speech signal level Ps and their relationship may be stored in the system. By way of example, it is possible to provide a reference signal level $P_{ref}$. When the detected signal level Ps deviates from the reference value $P_{ref}$ the amplification V can be determined using a standard amplification factor $V_0$ using a parameter a for attenuating the amplification:

$$V = \alpha \cdot \sqrt{\frac{P_s}{P_{ref}}} \cdot V_0 \qquad (1)$$

Accordingly, the signal level of the speech input can be used to adapt the signal level of the speech output in such a way that a loud speech input results in a loud speech output and a low voice speech input results in a low voice speech output. This embodiment can also be seen as an improvement of the user comfort. However, when it is detected that the voice of the user was too low that it was hardly possible to correctly identify the speech input, also the converse reaction is possible. If the signal level of the speech input is too low compared to the background noise, it is possible to raise the signal level of the speech output encouraging the user also to speak up. Furthermore, it is possible to raise the Lombard level or to carry out a filtering of the speech output emphasizing some of the frequency ranges of the speech input which were disturbed by the background noise during the speech input. If the user, however, speaks very loudly, the speech output control unit can lower the signal level of the speech output in order to encourage the user to lower his or her voice. If the user speaks too loudly, the detected microphone signal can be defective due to clipping. Accordingly, it is also possible to provide a clipping detector detecting a signal level over a predetermined threshold value. In this embodiment, the speech output is adapted in such a way that a proper functioning of the speech dialog system is maintained.

Another possibility to adapt the speech output to the user's speech input, not shown in Fig. 3, is the following: As discussed above, the speech dialog system often repeats the recognized speech input. For the user, it may be more convenient when the pitch characteristic indicating the frequency characteristic in time of the user's speech input is taken into consideration for the speech output. By way of example, when the pitch characteristic of the user is known by $f_{0,user}$ (t) and if a standard speech output of the system has the pitch characteristic $f_{0,system}$ (t), the pitch characteristic could be adapted in the following way:

$$f_{0,system,mod1}(t) = f_{0,user}(t) \cdot \frac{\overline{f}_{0,system}}{\overline{f}_{0,user}} \quad , \qquad (2)$$

$\overline{f}_{0,system}$ and $\overline{f}_{0,user}$ being the mean pitch of the speech output and user's speech input, respectively.

In this embodiment the user's pitch characteristic is completely taken into account. Furthermore, it is also possible to only partly adapt the pitch characteristic of the speech output as shown by the following equation, $\alpha$ being the degree of adaptation. In any case, the main pitch of the standard speech output should be maintained as can be seen by the following equation.

$$f_{0,system,mod2}(t) = (1 - \alpha) \cdot f_{0,system}(t) + \alpha \cdot f_{0,system,mod1}(t) \qquad (3)$$

Up to now, the speech input of the user itself has been considered and the play back mode has been adapted to the speech input. However, it is also possible to consider the surrounding of the speech dialog system. Especially when the system is used in vehicles, the traffic situation or the position of the vehicle may be an important factor for the determination how the speech output is output to the user. To this end, it is possible in step 360 to determine the traffic situation, e.g. by using the image sensor 170 or by using a distance sensor detecting vehicles driving in front of the vehicle (not shown). When it is detected that the driver is driving in a difficult traffic situation, it might be advisable to lower the output velocity of the speech output. Another parameter which may influence the play back mode of the speech output can be the fact where the vehicle is moving. In step 370, the position determination unit 160 may determine the actual vehicle position. To this end, the position determination unit may access map data 165 and may compare the present position to the map data in order to determine where on the map the vehicle is located. If it is determined that the vehicle's position is next to a crossway or positioned at any other location where the driver's attention is needed for driving, it may be advisable to lower the play back velocity of the speech output. As an alternative, it is also possible to detect whether the driver has activated the direction indicator. In the affirmative, it may also be advisable to lower the speech output velocity or to delay the speech output until the end of the activation of the direction indicator.

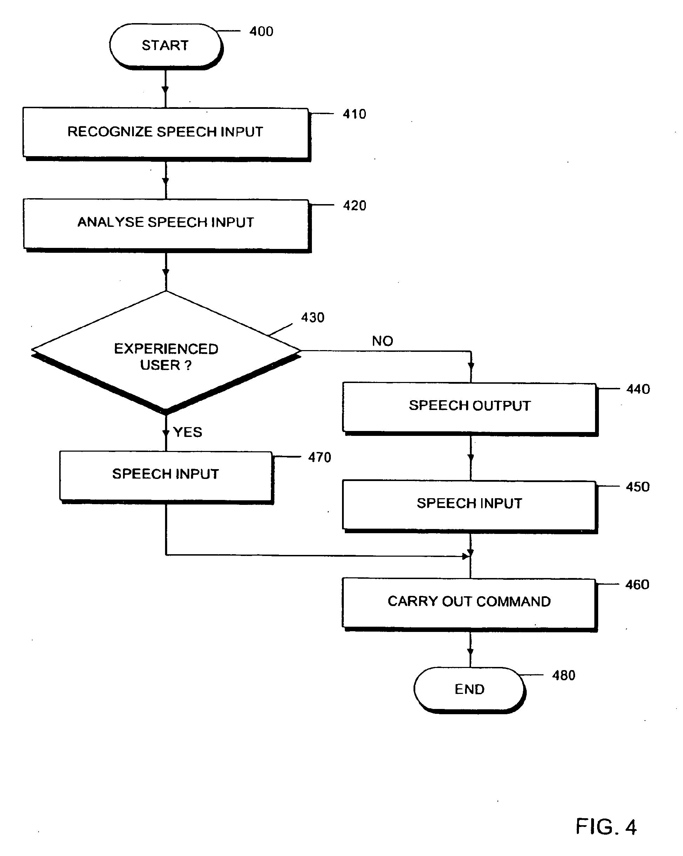

As described above, many parameters may influence the play back mode of the speech output. The detector now has to prioritize the different information in order to make a final decision how to adapt the play back mode (step 380). The prioritization means that the system follows the request to adapt the play back mode in one way, even if another information would result in the adaptation of the play back mode in another way contrary to the first way. According to the invention, different possibilities to prioritize the received information access. According to one embodiment, it might be advantageous to prioritize the information in such a way that the minimization of distraction in difficult traffic situations has the highest priority. This means that the receptivity of the driver or user prevails over all other information. The second prioritization may be the manipulation of the user's speech input. When the quality of the user's speech input is such that the speech recognition unit is hardly able to correctly recognize the speech input, the speech output should be adapted in such a way that the proper functioning of the system is guaranteed. By way of example, it is possible that the user speaks fast or at a very low voice making the recognition step difficult. Accordingly, if a difficult driving situation cannot be detected, the play back mode should be adapted in such a way that the user is incited to properly speak the speech input using a voice which can be understood by the speech recognition unit. When the user's voice is too low, the Lombard level and/or sound level of the speech output should be increased, when the user speaks to loudly, the signal level of the speech output may be lowered. The third priority may be assigned to the enhancement of intelligibility for the user meaning that when it is detected that a large background noise exists during the speech input, the signal level of the speech output is increased etc. The last priority may be assigned to the user comfort adapting the speech dialog system in such a way that it is most convenient for the user as will be discussed in connection with Fig. 4 further below. After the information received in steps 310 to 370 is prioritized in step 380, the play back mode is adapted accordingly in step 390 before the method ends in step 400. It should be understood that not all the different kinds of information need to be detected for adapting the play back mode. It is possible to only detect one kind of information such as speech input velocity or traffic situation, or to detect some of the information described in Fig. 3 and to adapt the play back mode after prioritization. In the described embodiment, the highest priority has the information received from outside the speech dialog system. In case for a vehicle based speech dialog system the receptivity of the driver has to be considered first. When no information regarding difficult traffic situation is present, it can be detected whether the quality of the user's speech input is high enough in order for the speech recognition unit to correctly identify the input speech. If this is not the case, the play back mode should be adapted in such a way that the user is incited to utter the speech command in such a way that it can be properly understood by the speech recognition unit. If no information regarding the traffic situation and no information regarding the intelligibility of the system is received, the play back mode can be adapted in such a way that the user can correctly understand the speech output of the speech output unit. If the background noise is very high, the signal level of the speech output may be raised. The criteria having the lowest priority can be the user comfort if no adaptation of the speech output in view of the above-mentioned three criteria is needed, the speech dialog system can adapt the speech output in such a way that the user comfort is increased.

In Fig. 4, an embodiment is described where the speech output is adapted in order to increase the user comfort. The method of Fig. 4 starts in step 400. As described in connection with Figs. 2 and 3, the speech input is recognized in step 410. In step 420, the speech input is analyzed in order to detect some of the characteristics of the speech input. By way of example, when the user inputs a speech command fluently or when the system detects that always the same user inputs the speech command, the detector might follow that the user is an experienced user who knows how to handle the speech dialog system. Accordingly, it is asked in step 430 whether it is an experienced user. It is possible to consider any kind of information as a basis for deciding whether it is an experienced user or not. Another possibility to detect whether the user is an experienced user can be seen in the fact when the user interrupts the speech output repeating the recognized speech input. If it is detected that the user is probably not an experienced user, the system answers with a speech output in step 440. By way of example, when the user wants to enter a telephone number using a speech command, the user's speech input in 410 may be something like "Dial number". If it was detected in step 430 that it is not an experienced user, the speech output in step 440 may be "The number please". The user can then input the number in step 450 before the number is dialled in step 460. If it is however detected in step 430 that the user is an experienced user, the speech output of step 440 might be disabled or might be replaced by a single tone such as a beep indicating to the user that the speech recognition unit is ready for signal input. The user can then directly input the speech in step 470, the system then carrying out the speech command in step 460. The method ends in step 480.

It should be understood that the embodiment disclosed in Fig. 4 can also be combined with the other embodiments disclosed above.

Summarizing, the present invention helps to adapt a play back mode of the speech output to the actual situation in which it is used.

## Claims

1. Speech dialog system, comprising:

   - a speech recognition unit (110) for recognising a user's speech input,
   - a speech output unit (130) for outputting speech to the user in response to the user's speech input,
   - a speech output control unit (120) for controlling a play back mode of the speech output to the user,
   - a detector (150) for detecting information from at least one of the speech input and a sensor for detecting information about the surrounding of the speech dialog system,

   **characterized in that** the detector detects the speech input velocity by determining the time period of the different words of the speech input and/or the time period of the intervals between consecutive words,
   wherein the speech output control unit adapts the play back mode of the speech output unit in dependence on the information received from the detector,
   wherein the detector detects the speech input from the user and analyses the speech input, the speech output control unit (120) adapting the playback mode in accordance with the analysed speech input.

2. Speech dialog system according to claim 1, wherein the speech output control unit (120) changes at least one of the following properties of the speech output: output velocity, sound level, pitch, cadence, stress.

3. Speech dialog system according to any of the preceding claims, wherein the detector (150) detects at least one of the following properties of the speech input: sound level, pitch, cadence, stress.

4. Speech dialog system according to any of the preceding claims, wherein the speech output control unit (120), for changing the play back mode of the speech output, modifies a standard play back mode and/or uses different sets of predetermined subword units.

5. Speech dialog system according to any of the preceding claims, wherein, when the detector (150) detects that the speech input velocity is lower than a predetermined threshold velocity, the speech output control unit (120) lowers the output velocity of the speech output, wherein, when the detector (150) detects that the speech input velocity is higher than a predetermined threshold velocity, the speech output control unit (120) increases the output velocity of the speech output.

6. Speech dialog system according to any of the preceding claims, wherein, when the detector (150) detects that the speech output contains a sequence of figures, the detector (150) detects a possible segmentation of the figures in the speech input into groups, wherein the speech output control unit (120) controls the speech output in such a way that when the input sequence of figures is output to the user the detected segmentation of the figures into groups is maintained in the speech output.

7. Speech dialog system according to any of the preceding claims, wherein the detector (150) compares the recognized user's speech input to a database (180) containing a plurality of data sets (182) and when it is detected that at least part of the recognized speech input is contained in the plurality of data sets, the speech output control unit suppresses the speech output repeating the recognized speech input from the user.

8. Speech dialog system according to claim 7, wherein, when the detector (150) detects a sequence of figures in the user's speech input and when the detector (150) detects that the recognized sequence of figures is contained in at least one of the plurality of data sets (182), the speech output control unit (120) suppresses the speech output repeating the recognized sequence of figures.

9. Speech dialog system according to any of claims 2 to 8, wherein the detector (150) detects the pitch characteristics of the speech input, the speech output control unit adapting the pitch characteristics of the speech output in agreement to the pitch characteristics of the speech input.

10. Speech dialog system according to any of claims 2 to 9, wherein the detector (150) detects a background noise of the speech input, the speech output control unit (120) adapting the speech output in accordance to the detected background noise.

11. Speech dialog system according to any of claims 2 to 10, wherein when the detector (150) detects that the signal level of the speech input is lower than a predetermined threshold level, the speech output control unit (120) increases a Lombard level of the speech output, wherein when the detector detects that the signal level of the speech input is higher than a predetermined threshold level, the speech output control unit lowers the Lombard level of the speech output.

12. Speech dialog system according to any of the preceding claims, wherein the speech dialog system is a vehicle based speech dialog system, the detector (150) detecting information of the vehicle surrounding, wherein the speech output control unit adapts the play back mode of the speech output in accordance to the information of the vehicle surrounding.

13. Speech dialog system according to any of the preceding claims, wherein the detector (150) comprises a image sensor (170) detecting the traffic situation around the vehicle, the speech output control unit (120) adapting the play back mode of the speech output to the traffic situation.

14. Speech dialog system according to any of the preceding claims, wherein the detector (150) comprises a position detecting unit (160) detecting the position of the vehicle and determines the position of the vehicle on a map, wherein the speech output control unit adapts the speech output in accordance to the detected position on the map.

15. Speech dialog system according to any of the preceding claims, wherein the detector (150) detects an activation of an direction indicator in the vehicle, wherein in the affirmative the speech output control unit lowers the output velocity of the speech output.

16. Speech dialog system according to any of the preceding claims, wherein the speech output control unit (120) activates an expert mode in which the speech output of the speech dialog system is reduced when the detector detects that the speech input is input in a predetermined way.

17. Speech dialog system according to any of the preceding claims wherein the detector (150) prioritizes the received information in such a way that one information that would result in an adaptation of the speech output in one way prevails over another information that would result in the adaptation of the speech output in another way.

18. Speech dialog system according to claim 17, wherein the detector (150) prioritizes the received information in such a way that the adaptation of the speech output influencing the receptivity of the user prevails over other information.

19. Speech dialog system according to any of the preceding claims, wherein, when the detector (150) detects that the user is an experienced user, the speech output control unit switches into an expert operating mode in which at least part of the speech output to the user which would be output in an non-expert operating mode, is disabled.

20. Method for adapting the speech output of a speech dialog system, comprising the following steps:

- recognising a user's speech input,
- outputting speech to the user in response to the user's speech input,
- detecting information from at least one of the speech input and a sensor detecting information about the surrounding of the speech dialog system,

**characterized in that** the speech input velocity is detected by detecting the time period of the different words of the speech input and/or the time period of the intervals between consecutive words,
wherein the play back mode of the speech output is adapted in dependence on the detected information,

wherein the speech input from the user is detected and analysed, and the playback mode is adapted in accordance with the analysed speech input.

21. The method according to claim 20, wherein at least one of the following properties of the speech output is changed: output velocity, sound level, pitch.

22. The method according to any of claims 20 to 21, wherein at least one of the following properties of the speech input is detected: sound level, pitch.

23. The method according to any of claims 20 to 22, wherein, when it is detected that the speech input velocity is lower than a predetermined threshold velocity, the output velocity of the speech output is lowered, wherein, when it is detected that the speech input velocity is higher than a predetermined threshold velocity, the output velocity of the speech output is increased.

24. The method according to any of claims 20 to 23, wherein, when it is detected that the speech output contains a sequence of figures, a possible segmentation of the figures in the speech input into groups is detected, wherein the speech output control unit controls the speech output in such a way that when the input sequence of figures is output to the user the detected segmentation of the figures into groups is maintained in the speech output.

25. The method according to any of claims 20 to 24, wherein the recognized user's speech input is compared to a database containing a plurality of data sets and when it is detected that at least part of the recognized speech input is contained in the plurality of data sets, the speech output repeating the recognized speech input from the user is suppressed.

26. The method according to claim 25, wherein, when a sequence of figures is detected in the user's speech input and when it is detected that the recognized figures is contained in at least one of the plurality of data sets, the speech output repeating the recognized sequence of figures is suppressed.

27. The method according to any of claims 20 to 26, wherein the pitch characteristics of the speech input are detected and the pitch characteristics of the speech output is adapted in agreement to the pitch characteristics of the speech input.

28. The method according to any of claims 20 to 27, wherein a background noise of the speech input is detected and the speech output is adapted in accordance to the detected background noise.

29. The method according to any of claims 20 to 28, wherein when it is detected that the signal level of the speech input is lower than a predetermined threshold level, a Lombard level of the speech output is increased, wherein when it is detected that the signal level of the speech input is higher than a predetermined threshold level, the Lombard level of the speech output is lowered.

30. The method according to any of claims 20 to 29 wherein the speech dialog system is installed in a vehicle and the information of the surrounding of the vehicle is detected, wherein the play back mode of the speech output is adapted in accordance to the information of the vehicle surrounding.

31. The method according to any of claims 20 to 30, wherein the traffic situation around the vehicle is detected and the play back mode of the speech output is adapted to the traffic situation.

32. The Method according to any of claims 30 or 31, wherein a position of the vehicle on a map is determined, wherein the speech output is adapted in accordance to the detected position on the map.

33. The method according to any of claims 30 to 32, wherein; when an activation of an direction indicator is detected in the vehicle, the output velocity of the speech output is lowered.

34. The method according to any of claims 20 to 33, wherein an expert mode is activated when it is detected that the speech input is input in a predetermined way.

35. The method according to any of claims 20 to 34, wherein the received information is prioritized in such a way that one information that would result in an adaptation of the speech output in one way prevails over another information that would result in the adaptation of the speech output in another way.

36. Method according to any of claims 20 to 35, wherein, when it is detected that the user is an experienced user, at least part of the speech output to the user which would be output to a non-experienced user is disabled.

37. Computer program product loadable into an internal memory of a digital computer or stored on a computer, which when run on the computer carries out the method as claimed in any of claims 20 to 36.

38. Computer readable medium having computer readable instructions on it to cause a computer to perform the method as claimed in any of claims 20 to 36.

**Patentansprüche**

1. Sprachdialogsystem umfassend:

   - eine Spracherkennungseinheit (110) zum Erkennen einer Spracheingabe eines Benutzers,
   - eine Sprachausgabeeinheit (130) zum Ausgeben von Sprache an den Benutzer als Antwort auf die Spracheingabe des Benutzers,
   - eine Sprachausgabesteuereinheit (120) zum Steuern einer Wiedergabebetriebsart der Sprachausgabe an den Benutzer,
   - einen Detektor (150) zum Detektieren einer Information von der Spracheingabe und/oder einem Sensor zum Erfassen einer Information über die Umgebung des Sprachdialogsystems, **dadurch gekennzeichnet, dass** der Detektor die Spracheingabegeschwindigkeit durch Bestimmen der Zeitdauer der unterschiedlichen Worte der Spracheingabe und/oder der Zeitdauer der Abstände zwischen aufeinanderfolgenden Worten erfasst, wobei die Sprachausgabesteuereinheit die Wiedergabebetriebsart der Sprachausgabeeinheit in Abhängigkeit von der von dem Detektor empfangenen Information anpasst,

   wobei der Detektor die Spracheingabe von dem Benutzer detektiert und die Spracheingabe analysiert, wobei die Sprachausgabesteuereinheit (120) die Wiedergabebetriebsart gemäß der analysierten Spracheingabe anpasst.

2. nach Anspruch 1, wobei die Sprachausgabeeinheit (120) mindestens eine der folgenden Eigenschaften der Sprachausgabe ändert: Ausgabegeschwindigkeit, Geräuschpegel, Abstand, Tonfall, Betonung.

3. Sprachdialogsystem nach einem der vorhergehenden Ansprüche, wobei der Detektor (150) mindestens eine der folgenden Eigenschaften der Spracheingabe detektiert: Geräuschpegel, Abstand, Tonfall, Betonung.

4. Sprachdialogsystem nach einem der vorhergehenden Ansprüche, wobei die Sprachausgabesteuereinheit (120) zum Ändern der Wiedergabebetriebsart der Sprachausgabe eine Standardwiedergabebetriebsart ändert und/oder unterschiedliche Gruppen von vorbestimmten Teilworteinheiten verwendet.

5. Sprachdialogsystem nach einem der vorhergehenden Ansprüche, wobei, wenn der Detektor (150) detektiert, dass die Spracheingabegeschwindigkeit geringer als eine vorbestimmte Schwellenwertgeschwindigkeit ist, die Sprachausgabesteuereinheit (120) die Ausgabegeschwindigkeit der Sprachausgabe verringert, wobei, wenn der Detektor (150) detektiert, dass die Spracheingabegeschwindigkeit höher als eine vorbestimmte Schwellenwertgeschwindigkeit ist, die Sprachausgabesteuereinheit (120) die Ausgabegeschwindigkeit der Sprachausgabe erhöht.

6. Sprachdialogsystem nach einem der vorhergehenden Ansprüche, wobei, wenn der Detektor (150) detektiert, dass die Sprachausgabe eine Folge von Zahlen enthält, der Detektor (150) eine mögliche Segmentierung der Zahlen in der Spracheingabe in Gruppen detektiert, wobei die Sprachausgabesteuereinheit (120) die Sprachausgabe in einer derartigen Art und Weise steuert, dass, wenn die eingegebene Folge von Zahlen zu dem Benutzer ausgegeben wird, die detektierte Segmentierung der Zahlen in Gruppen in der Sprachausgabe beibehalten wird.

7. Sprachdialogsystem nach einem der vorhergehenden Ansprüche, wobei der Detektor (150) die erkannte Spracheingabe des Benutzers mit einer Datenbasis (180) vergleicht, welche mehrere Datensätze (182) enthält, und, wenn detektiert wird, dass zumindest ein Teil der erkannten Spracheingabe in den mehreren Datensätzen enthalten ist, die Sprachausgabesteuerungseinheit die Sprachausgabe unterdrückt, welche die erkannte Spracheeingabe von dem Benutzer wiederholt.

**8.** Sprachdialogsystem nach Anspruch 7, wobei, wenn der Detektor (150) eine Folge von Zahlen in der Spracheingabe des Benutzers detektiert und wenn der Detektor detektiert, dass die erkannte Folge von Zahlen in mindestens einer der mehreren Datensätze (182) enthalten ist, die Sprachausgabesteuereinheit (120) die Sprachausgabe unterdrückt, welche die erkannte Folge von Zahlen wiederholt.

**9.** Sprachdialogsystem nach einem der Ansprüche 2-8, wobei der Detektor (150) die Abstandseigenschaften der Spracheingabe detektiert, wobei die Sprachausgabesteuereinheit die Abstandseigenschaften der Sprachausgabe in Übereinstimmung mit den Abstandseigenschaften der Spracheingabe anpasst.

**10.** Sprachdialogsystem nach einem der Ansprüche 2-9, wobei der Detektor (150) ein Hintergrundgeräusch der Spracheingabe detektiert, wobei die Sprachausgabesteuereinheit (120) die Sprachausgabe gemäß dem detektierten Hintergrundgeräusch anpasst.

**11.** Sprachdialogsystem nach einem der Ansprüche 2-10, wobei, wenn der Detektor (150) detektiert, dass der Signalpegel der Spracheingabe kleiner als ein vorbestimmter Schwellenwertpegel ist, die Sprachausgabesteuereinheit (120) einen Lombard-Pegel der Sprachausgabe erhöht, wobei, wenn der Detektor detektiert, dass der Signalpegel der Spracheingabe höher als ein vorbestimmter Schwellenwertpegel ist, die Sprachausgabesteuereinheit den Lombard-Pegel der Sprachausgabe verringert.

**12.** Sprachdialogsystem nach einem der vorhergehenden Ansprüche, wobei das Sprachdialogsystem ein fahrzeugbasiertes Sprachdialogsystem ist, wobei der Detektor (150) eine Information der Fahrzeugumgebung detektiert, wobei die Sprachausgabesteuereinheit die Wiedergabebetriebsart der Sprachausgabe gemäß der Information über die Fahrzeugumgebung anpasst.

**13.** Sprachdialogsystem nach einem der vorhergehenden Ansprüche, wobei der Detektor (150) einen Bildsensor (170) umfasst, welcher die Verkehrssituation um das Fahrzeug erfasst, wobei die Sprachausgabesteuereinheit (120) die Wiedergabebetriebsart der Sprachausgabe an die Verkehrssituation anpasst.

**14.** Sprachdialogsystem nach einem der vorhergehenden Ansprüche, wobei der Detektor (150) eine Positionserfassungseinheit (160) umfasst, welche die Position des Fahrzeugs erfasst und die Position des Fahrzeugs auf einer Karte bestimmt, wobei die Sprachausgabesteuereinheit die Sprachausgabe gemäß der erfassten Position auf der Karte anpasst.

**15.** Sprachdialogsystem nach einem der vorhergehenden Ansprüche, wobei der Detektor (150) eine Aktivierung eines Richtungsanzeigers des Fahrzeugs detektiert, wobei bejahend die Sprachausgabesteuereinheit die Ausgabegeschwindigkeit der Sprachausgabe verringert.

**16.** Sprachdialogsystem nach einem der vorhergehenden Ansprüche, wobei die Sprachausgabesteuereinheit (120) eine Expertenbetriebsart, in welcher die Sprachausgabe des Sprachdialogsystems verringert wird, aktiviert, wenn der Detektor detektiert, dass die Spracheingabe in einer vorbestimmten Art eingegeben wird.

**17.** Sprachdialogsystem nach einem der vorhergehenden Ansprüche, wobei der Detektor (150) die empfangene Information derartig priorisiert, dass sich eine Information, welche zu einer Anpassung der Sprachausgabe auf eine Art führen würde, gegenüber einer anderen Information, welche zu einer Anpassung der Sprachausgabe auf eine andere Art führen würde, durchsetzt.

**18.** Sprachdialogsystem nach Anspruch 17, wobei der Detektor (150) die empfangene Information derartig priorisiert, dass sich die Anpassung der Sprachausgabe, welche die Aufnahmefähigkeit des Benutzers beeinflusst, gegenüber einer anderen Information durchsetzt.

**19.** Sprachdialogsystem nach einem der vorhergehenden Ansprüche, wobei, wenn der Detektor (150) detektiert, dass der Benutzer ein erfahrenen Benutzer ist, die Sprachausgabesteuereinheit in eine Expertenbetriebsart schaltet, in welcher zumindest ein Teil der Sprachausgabe zu dem Benutzer, welcher in einer Nicht-Expertenbetriebsart ausgegeben werde würde, unterdrückt wird.

**20.** Verfahren zum Anpassen der Sprachausgabe eines Sprachdialogsystems, umfassend die folgenden Schritte:

- Erkennen einer Spracheingabe eines Benutzers,

- Ausgeben von Sprache an den Benutzer als Antwort auf die Spracheingabe des Benutzers,
- Detektieren einer Information von der Spracheingabe und/oder einem Sensor, welcher eine Information über die Umgebung des Sprachdialogsystems detektiert,

**dadurch gekennzeichnet, dass** die Spracheingabegeschwindigkeit detektiert wird, indem die Zeitdauer der unterschiedlichen Worte der Spracheingabe und/oder die Zeitdauer der Abstände zwischen aufeinanderfolgenden Worten detektiert wird,
wobei die Wiedergabebetriebsart der Sprachausgabe in Abhängigkeit von der detektierten Information angepasst wird,
wobei die Spracheingabe von dem Benutzer detektiert und analysiert wird, und wobei die Wiedergabebetriebsart gemäß der analysierten Spracheingabe angepasst wird.

21. Verfahren nach Anspruch 20, wobei mindestens eine der folgenden Eigenschaften der Sprachausgabe geändert wird: Ausgabegeschwindigkeit, Geräuschpegel, Abstand.

22. Verfahren nach einem der Ansprüche 20-21, wobei mindestens eine der folgenden Eigenschaften der Spracheingabe detektiert wird: Geräuschpegel, Abstand.

23. Verfahren nach einem der Ansprüche 20-22, wobei, wenn detektiert wird, dass die Spracheingabegeschwindigkeit geringer als eine vorbestimmte Schwellenwertgeschwindigkeit ist, die Ausgabegeschwindigkeit der Sprachausgabe verringert wird, wobei, wenn detektiert wird, dass die Spracheingabegeschwindigkeit höher als eine vorbestimmte Schwellenwertgeschwindigkeit ist, die Ausgabegeschwindigkeit der Sprachausgabe erhöht wird.

24. Verfahren nach einem der Ansprüche 20-23, wobei, wenn detektiert wird, dass die Sprachausgabe eine Folge von Zahlen enthält, eine mögliche Segmentierung der Zahlen in der Spracheingabe in Gruppen detektiert wird, wobei die Sprachausgabesteuereinheit die Sprachausgabe derart steuert, dass, wenn die eingegebene Folge von Zahlen zu dem Benutzer ausgegeben wird, die detektierte Segmentierung der Zahlen in Gruppen in der Sprachausgabe beibehalten wird.

25. Verfahren nach einem der Ansprüche 20-24, wobei die erkannte Spracheingabe des Benutzers mit einer Datenbasis verglichen wird, welche mehrere Datensätze enthält, und, wenn detektiert wird, dass zumindest ein Teil der erkannten Spracheingabe in den mehreren Datensätzen enthalten ist, die Sprachausgabe unterdrückt wird, welche die erkannte Spracheingabe von dem Benutzer wiederholt.

26. Verfahren nach Anspruch 25, wobei, wenn eine Folge von Zahlen in der Spracheingabe des Benutzers detektiert wird, und wenn detektiert wird, dass die erkannten Zahlen in mindestens einem der mehreren Datensätze enthalten ist, die Sprachausgabe unterdrückt wird, welche die erkannte Folge von Zahlen wiederholt.

27. Verfahren nach einem der Ansprüche 20-26, wobei die Abstandseigenschaften der Spracheingabe detektiert werden und die Abstandseigenschaften der Sprachausgabe in Übereinstimmung mit den Abstandseigenschaften der Spracheingabe angepasst werden.

28. Verfahren nach einem der Ansprüche 20-27, wobei ein Hintergrundgeräusch der Spracheingabe detektiert wird und die Sprachausgabe gemäß dem detektierten Hintergrundgeräusch angepasst wird.

29. Verfahren nach einem der Ansprüche 20-28, wobei, wenn detektiert wird, dass der Signalpegel der Spracheingabe geringer als ein vorbestimmter Schwellenwertpegel ist, ein Lombard-Pegel der Sprachausgabe erhöht wird, wobei, wenn detektiert wird, dass der Signalpegel der Spracheingabe höher als ein vorbestimmter Schwellenwertpegel ist, der Lombard-Pegel der Sprachausgabe verringert wird.

30. Verfahren nach einem der Ansprüche 20-29, wobei das Sprachdialogsystem in einem Fahrzeug installiert ist und die Information der Umgebung des Fahrzeugs detektiert wird, wobei die Wiedergabebetriebsart der Sprachausgabe gemäß der Information der Fahrzeugumgebung angepasst wird.

31. Verfahren nach einem der Ansprüche 20-30, wobei die Verkehrssituation um das Fahrzeug detektiert wird und die Wiedergabebetriebsart der Sprachausgabe an die Verkehrssituation angepasst wird.

32. Verfahren nach einem der Ansprüche 30 oder 31, wobei eine Position des Fahrzeugs auf einer Karte bestimmt wird, wobei die Sprachausgabe gemäß der erfassten Position auf der Karte angepasst wird.

33. Verfahren nach einem der Ansprüche 30-32, wobei, wenn eine Aktivierung eines Richtungsanzeigers in dem Fahrzeug detektiert wird, die Ausgabegeschwindigkeit der Sprachausgabe verringert wird.

34. Verfahren nach einem der Ansprüche 20-33, wobei eine Expertenbetriebsart aktiviert wird, wenn detektiert wird, dass die Spracheingabe in einer vorbestimmten Art eingegeben wird.

35. Verfahren nach einem der Ansprüche 20-34, wobei die empfangene Information derartig priorisiert wird, dass sich eine Information, welche zu einer Anpassung der Sprachausgabe auf eine Art führen würde, gegenüber einer anderen Information, welche zu einer Anpassung der Sprachausgabe auf eine andere Art führen würde, durchsetzt.

36. Verfahren nach einem der Ansprüche 20-35, wobei, wenn detektiert wird, dass der Benutzer ein erfahrener Benutzer ist, zumindest ein Teil der Sprachausgabe zu dem Benutzer unterdrückt wird, welcher an einen nicht erfahrenen Benutzer ausgegeben werden würde.

37. Computerprogrammprodukt, welches in einen internen Speicher eines digitalen Computers ladbar ist oder auf einem Computer gespeichert ist, und welches, wenn es auf dem Computer ausgeführt wird, das Verfahren, wie es in einem der Ansprüche 20-36 beansprucht ist, ausführt.

38. Computerlesbares Medium mit computerlesbaren Befehlen darauf, um zu bewirken, dass ein Computer das Verfahren, wie es in einem der Ansprüche 20-36 beansprucht wird, auszuführen.

**Revendications**

1. Système de dialogue vocal, comprenant:

   - une unité de reconnaissance vocale (110) pour reconnaître l'entrée vocale d'un utilisateur,
   - une unité de sortie vocale (130) pour émettre une sortie vocale vers l'utilisateur en réponse à l'entrée vocale de l'utilisateur,
   - un unité de commande de sortie vocale (120) pour commander un mode de reproduction de la sortie vocale pour l'utilisateur,
   - un détecteur (150) pour détecter une information provenant d'au moins l'un de l'entrée vocale et d'un capteur pour détecter une information sur l'environnement du système de dialogue vocal,

   **caractérisé en ce que** le détecteur détecte la vitesse de l'entrée vocale en déterminant le laps de temps des mots différents de l'entrée vocale et/ou le laps de temps des intervalles entre des mots consécutifs,
   dans lequel l'unité de commande de sortie vocale adapte le mode de reproduction de l'unité de sortie vocale en fonction de l'information reçue du détecteur,
   dans lequel le détecteur détecte l'entrée vocale provenant de l'utilisateur et analyse l'entrée vocale, l'unité de commande de sortie vocale (120) adaptant le mode de reproduction conformément à l'entrée vocale analysée.

2. Système de dialogue vocal selon la revendication 1, dans lequel l'unité de commande de sortie vocale (120) change au moins l'une des propriétés suivantes de la sortie vocale: vitesse de sortie, niveau sonore, espacement, cadence, contrainte.

3. Système de dialogue vocal selon l'une quelconque des revendications précédentes, dans lequel le détecteur (150) détecte au moins l'une des propriétés suivantes de l'entrée vocale: niveau sonore, espacement, cadence, contrainte.

4. Système de dialogue vocal selon l'une quelconque des revendications précédentes, dans lequel l'unité de commande de sortie vocale (120), pour changer le mode de reproduction de la sortie vocale, modifie un mode de reproduction standard et/ou utilise des ensembles différents d'unités de sous-mots prédéterminées.

5. Système de dialogue vocal selon l'une quelconque des revendications précédentes, dans lequel, lorsque le détecteur (150) détecte que la vitesse de l'entrée vocale est inférieure à une vitesse de seuil prédéterminée, l'unité de commande de sortie vocale (120) réduit la vitesse de la sortie vocale, dans lequel, lorsque le détecteur (150) détecte que la vitesse de l'entrée vocale est supérieure à une vitesse de seuil prédéterminée, l'unité de commande de sortie vocale (120) augmente la vitesse de sortie de la sortie vocale.

6. Système de dialogue vocal selon l'une quelconque des revendications précédentes, dans lequel, lorsque le détecteur (150) détecte que la sortie vocale comprend une séquence de chiffres, le détecteur (150) détecte une segmentation possible des chiffres dans l'entrée vocale en groupes, dans lequel l'unité de commande de sortie vocale (120) commande la sortie vocale de telle manière que, lorsque la séquence d'entrée de chiffres est sortie vers l'utilisateur, la segmentation des chiffres en groupes détectée est maintenue dans la sortie vocale.

7. Système de dialogue vocal selon l'une quelconque des revendications précédentes, dans lequel le détecteur (150) compare l'entrée vocale de l'utilisateur reconnue à un banc de données (180) contenant une pluralité de fichiers (182), et lorsqu'on détecte qu'au moins une partie de l'entrée vocale reconnue est contenue dans la pluralité de fichiers, l'unité de commande de sortie vocale supprime la sortie vocale répétant l'entrée vocale de l'utilisateur reconnue.

8. Système de dialogue vocal selon la revendication 7, dans lequel, lorsque le détecteur (150) détecte une séquence de chiffres dans l'entrée vocale de l'utilisateur, et lorsque le détecteur (150) détecte que la séquence de chiffres reconnue est contenue dans au moins l'un de la pluralité de fichiers (182), l'unité de commande de sortie vocale (120) supprime la sortie vocale répétant la séquence de chiffres reconnue.

9. Système de dialogue vocal selon l'une quelconque des revendications 2 à 8, dans lequel le détecteur (150) détecte les caractéristiques d'espacement de l'entrée vocale, l'unité de commande de sortie vocale adaptant les caractéristiques d'espacement de la sortie vocale conformément aux caractéristiques d'espacement de l'entrée vocale.

10. Système de dialogue vocal selon l'une quelconque des revendications 2 à 9, dans lequel le détecteur (150) détecte un bruit de fond de l'entrée vocale, l'unité de commande de sortie vocale (120) adaptant la sortie vocale conformément au bruit de fond détecté.

11. Système de dialogue vocal selon l'une quelconque des revendications 2 à 10, dans lequel, lorsque le détecteur (150) détecte que le niveau de signal de l'entrée vocale est inférieur à un niveau de seuil prédéterminé, l'unité de commande de sortie vocale (120) augmente un niveau de l'effet Lombard de la sortie vocale, dans lequel, lorsque le détecteur détecte que le niveau de signal de l'entrée vocale est supérieur à un niveau de seuil prédéterminé, l'unité de commande de sortie vocale baisse le niveau de l'effet Lombard de la sortie vocale.

12. Système de dialogue vocal selon l'une quelconque des revendications précédentes, dans lequel le système de dialogue vocal est un système de dialogue vocal embarqué, le détecteur (150) détectant une information sur l'environnement du véhicule, dans lequel l'unité de commande de sortie vocale adapte le mode de reproduction de la sortie vocale conformément à l'information sur l'environnement du véhicule.

13. Système de dialogue vocal selon l'une quelconque des revendications précédentes, dans lequel le détecteur (150) comprend un capteur d'image (170) détectant la situation de la circulation autour du véhicule, l'unité de commande de sortie vocale (120) adaptant le mode de reproduction de la sortie vocale à la situation de la circulation.

14. Système de dialogue vocal selon l'une quelconque des revendications précédentes, dans lequel le détecteur (150) comprend une unité de détection de position (160) détectant la position du véhicule et détermine la position du véhicule sur une carte, dans lequel l'unité de commande de sortie vocale adapte la sortie vocale conformément à la position détectée sur la carte.

15. Système de dialogue vocal selon l'une quelconque des revendications précédentes, dans lequel le détecteur (150) détecte une activation d'un indicateur de direction dans le véhicule, dans lequel, dans l'affirmative, l'unité de commande de sortie vocale réduit la vitesse de sortie de la sortie vocale.

16. Système de dialogue vocal selon l'une quelconque des revendications précédentes, dans lequel l'unité de commande de sortie vocale (120) active un mode expert dans lequel la sortie vocale du système de dialogue vocal est réduite lorsque le détecteur détecte que l'entrée vocale est entrée d'une manière prédéterminée.

17. Système de dialogue vocal selon l'une quelconque des revendications précédentes, dans lequel le détecteur (150) priorise l'information reçue de telle sorte qu'une information qui conduirait à une adaptation de la sortie vocale d'une manière prévaut sur une autre information qui conduirait à l'adaptation de la sortie vocale d'une autre manière.

**18.** Système de dialogue vocal selon la revendication 17, dans lequel le détecteur (150) priorise l'information reçue de telle sorte que l'adaptation de la sortie vocale influençant la réceptivité de l'utilisateur prévaut sur d'autres informations.

**19.** Système de dialogue vocal selon l'une quelconque des revendications précédentes, dans lequel, lorsque le détecteur (150) détecte que l'utilisateur est un utilisateur confirmé, l'unité de commande de sortie vocale commute dans un mode opératoire expert dans lequel au moins une partie de la sortie vocale vers l'utilisateur qui serait sortie dans un mode opératoire non-expert est mise hors fonction.

**20.** Procédé pour adapter la sortie vocale d'un système de dialogue vocal, comprenant les étapes suivantes:

- reconnaître une entrée vocale d'un utilisateur,
- émettre une sortie vocale vers l'utilisateur en réponse à l'entrée vocale de l'utilisateur,
- détecter une information provenant d'au moins l'un de l'entrée vocale et d'un capteur détectant une information sur l'environnement du système de dialogue vocal,

**caractérisé en ce que** la vitesse d'entrée vocale est détectée en détectant le laps de temps des mots différents de l'entrée vocale et/ou le laps de temps des intervalles entre des mots consécutifs,
dans lequel le mode de reproduction de la sortie vocale est adapté en fonction de l'information détectée,
dans lequel l'entrée vocale provenant de l'utilisateur est détectée et analysée, et le mode de reproduction est adapté conformément à l'entrée vocale analysée.

**21.** Procédé selon la revendication 20, dans lequel au moins l'une des propriétés suivantes de la sortie vocale est changée: vitesse de sortie, niveau sonore, espacement.

**22.** Procédé selon l'une quelconque des revendications 20 à 21, dans lequel au moins l'une des propriétés suivantes de la sortie vocale est détectée: niveau sonore, espacement.

**23.** Procédé selon l'une quelconque des revendications 20 à 22, dans lequel, lorsqu'on détecte que la vitesse de l'entrée vocale est inférieure à une vitesse de seuil prédéterminée, la vitesse de sortie de la sortie vocale est réduite, dans lequel, lorsqu'on détecte que la vitesse de l'entrée vocale est supérieure à une vitesse de seuil prédéterminée, la vitesse de sortie de la sortie vocale est augmentée.

**24.** Procédé selon l'une quelconque des revendications 20 à 23, dans lequel, lorsqu'on détecte que la sortie vocale contient une séquence de chiffres, une segmentation possible des chiffres dans l'entrée vocale en groupes est détectée, dans lequel l'unité de commande de sortie vocale commande la sortie vocale de telle manière que, lorsque la séquence d'entrée de chiffres est sortie vers l'utilisateur, la segmentation des chiffres en groupes détectée est maintenue dans la sortie vocale.

**25.** Procédé selon l'une quelconque des revendications 20 à 24, dans lequel l'entrée vocale reconnue de l'utilisateur est comparée à un banc de données contenant une pluralité de fichiers, et lorsqu'on détecte qu'au moins une partie de l'entrée vocale reconnue est contenue dans la pluralité de fichiers, la sortie vocale répétant l'entrée vocale reconnue provenant de l'utilisateur est supprimée.

**26.** Procédé selon la revendication 25, dans lequel, lorsqu'une séquence de chiffres est détectée dans l'entrée vocale de l'utilisateur, et lorsqu'on détecte que les chiffres reconnus sont contenus dans au moins l'un de la pluralité de fichiers, la sortie vocale répétant la séquence de chiffres reconnue est supprimée.

**27.** Procédé selon l'une quelconque des revendications 20 à 26, dans lequel les caractéristiques d'espacement de l'entrée vocale sont détectées, et les caractéristiques d'espacement de la sortie vocale sont adaptées conformément aux caractéristiques d'espacement de l'entrée vocale.

**28.** Procédé selon l'une quelconque des revendications 20 à 27, dans lequel un bruit de fond de l'entrée vocale est détecté, et la sortie vocale est adaptée conformément au bruit de fond détecté.

**29.** Procédé selon l'une quelconque des revendications 20 à 28, dans lequel, lorsqu'on détecte que le niveau de signal de l'entrée vocale est inférieur à un niveau de seuil prédéterminé, un niveau de l'effet Lombard de la sortie vocale est augmenté, dans lequel, lorsqu'on détecte que le niveau de signal de l'entrée vocale est supérieur à un niveau de seuil prédéterminé, le niveau de l'effet Lombard de la sortie vocale est réduit.

**30.** Procédé selon l'une quelconque des revendications 20 à 29, dans lequel le système de dialogue vocal est installé dans un véhicule et l'information sur l'environnement du véhicule est détectée, dans lequel le mode de reproduction de la sortie vocale est adapté conformément à l'information sur l'environnement du véhicule.

**31.** Procédé selon l'une quelconque des revendications 20 à 30, dans lequel la situation de la circulation autour du véhicule est détectée et le mode de reproduction de la sortie vocale est adapté à la situation de la circulation.

**32.** Procédé selon l'une quelconque des revendications 30 ou 31, dans lequel une position du véhicule sur une carte est déterminée, dans lequel la sortie vocale est adaptée conformément à la position détectée sur la carte.

**33.** Procédé selon l'une quelconque des revendications 30 à 32, dans lequel, lorsqu'une activation d'un indicateur de direction est détectée dans le véhicule, la vitesse de sortie de la sortie vocale est réduite.

**34.** Procédé selon l'une quelconque des revendications 20 à 33, dans lequel un mode opératoire expert est activé lorsqu'on détecte que l'entrée vocale est entrée d'une manière prédéterminée.

**35.** Procédé selon l'une quelconque des revendications 20 à 34, dans lequel l'information reçue est priorisée de telle manière qu'une information, qui conduirait à une adaptation de la sortie vocale d'une manière, prévaut sur une autre information, qui conduirait à l'adaptation de la sortie vocale d'une autre manière.

**36.** Procédé selon l'une quelconque des revendications 20 à 35, dans lequel, lorsqu'on détecte que l'utilisateur est un utilisateur confirmé, au moins une partie de la sortie vocale vers l'utilisateur, qui serait sortie vers un utilisateur non-confirmé, est mise hors fonction.

**37.** Produit de programme ordinateur pouvant être chargé dans une mémoire interne d'un ordinateur numérique ou mémorisé dans un ordinateur, qui, lorsqu'il est exécuté sur l'ordinateur, effectue le procédé selon l'une quelconque des revendications 20 à 36.

**38.** Support lisible par ordinateur comportant des instructions lisibles par ordinateur pour inciter un ordinateur à exécuter le procédé selon l'une quelconque des revendications 20 à 36.

FIG. 1

START — 210

↓

RECOGNIZING SPEECH INPUT — 220

↓

DETECTING INFORMATION — 230

↓

ADAPT PLAY BACK MODE — 240

↓

CARRY OUT COMMAND
OF SPEECH INPUT — 250

↓

END — 260

FIG. 2

```
                    START                  ── 300

        RECOGNIZE SPEECH INPUT             ── 310

        DETERMINE TIME PERIOD              ── 320
          OF SPOKEN WORDS

        DETERMINE INTERVALS BETWEEN        ── 330
          CONSECUTIVE WORDS

            COMPARE TO                     ── 340
          REFERENCE VALUES

        DETERMINE SIGNAL LEVEL OF          ── 350
            SPEECH INPUT

        DETERMINE TRAFFIC SITUATION        ── 360

        DETERMINE VEHICLE                  ── 370
          POSITION ON MAP

        PRIORITIZE RECEIVED                ── 380
            INFORMATION

        ADAPT PLAY BACK MODE               ── 390

                    END                    ── 400
```

FIG. 3

FIG. 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060229873 A